Europäisches Patentamt

European Patent Office

Office européen des brevets

(11) Veröffentlichungsnummer: **0 491 227 A1**

# EUROPÄISCHE PATENTANMELDUNG

(21) Anmeldenummer: **91120757.9**

(51) Int. Cl.5: **F16D 65/12**

(22) Anmeldetag: **03.12.91**

(30) Priorität: **18.12.90 DE 4040423**

(43) Veröffentlichungstag der Anmeldung:
**24.06.92 Patentblatt 92/26**

(84) Benannte Vertragsstaaten:
**AT CH DE DK ES FR GB IT LI NL SE**

(71) Anmelder: **Bergische Stahl-Industrie**
**Papenbergerstrasse 38**
**W-5630 Remscheid(DE)**

(72) Erfinder: **Wiebelhaus, Wolfgang**
**Elsenborner Weg 3**
**W-4330 Mühlheim/Ruhr(DE)**
Erfinder: **Schneider, Jürgen, Dr.-Ing.**
**Am Gartenkamp 31**
**W-4630 Bochum(DE)**
Erfinder: **Rocholl, Hans**
**Damaschke Strasse 17a**
**W-5630 Remscheid(DE)**
Erfinder: **Gronemann, Manfred**
**Kastanienstrasse 1**
**W-5630 Remscheid(DE)**
Erfinder: **Lehmann, Wolfgang**
**Elisabethplatz 6**
**W-5630 Remscheid(DE)**

(74) Vertreter: **Jung, Hermann L., Dipl.-Chem.**
**Postfach 1728, Erlenweg 4**
**W-6380 Bad Homburg v.d.H.(DE)**

(54) **Geteilte oder ungeteilte Bremsscheibe mit Ventilation.**

(57) Die Erfindung bezieht sich auf eine Verbesserung des Kühlluftflusses insbesondere an Teilungsfugen von geteilten Bremsringen bzw. an zu Verbindungsnocken verbreitereten und/oder verlängerten Rippen, indem eine Querströmung zugelassen wird.

Fig. 1

EP 0 491 227 A1

Die Erfindung betrifft eine geteilte oder ungeteilte Bremsscheibe mit Ventilation für Schienenfahrzeuge, bestehend aus einer Nabe und einem fest oder lösbar mit der Nabe verbundenen Bremsring, wobei gegebenenfalls einzelne Rippen zur Verbindung von Bremsring und Nabe zu Verbindungsnocken verlängert und/oder verbreitert sind.

Derartige Bremsscheiben sind zum Beispiel aus DE 2o 62 4o7 C2 oder DE 22 28 738 C2 bekannt, wobei aber leicht zu erkennen ist, dass bei diesen bekannten Konstruktionen durch die Verbindungteile an der Teilungsfuge der Fluss der Kühlluft beeinträchtigt oder gar unterbrochen wird.Ausserdem wird durch den Wegfall eines Teils der Kühlrippen die Kühlfläche wesentlich verkleinert, was zu einer erheblichen Beeinträchtigung der Bremsscheibenkühlung führt. Der Verlust der Kühlfläche kann bis zu 3o% ausmachen. Besonders drastisch ist dieser Verlust bei der Konstruktion nach Gbm 76 18 775.

Der vorliegenden Erfindung liegt daher die Aufgabe zugrunde, die Nachteile der bekannten Konstruktionen von geteilten Bremsscheiben zu vermeiden und vor allem grösstmögliche Kühlflächen vorzusehen, ohne den Aufbau der Bremsscheiben und damit deren Gewicht wesentlich zu erhöhen.

Die Lösung der Aufgabe besteht darin, dass die die Verbindungsnocken tragenden Rippen bzw. die beiderseits einer Teilungsfuge liegenden Rippenteilstücke konzentrisch oder tangentiel verlaufende Ausnehmungen, Bohrungen oder Durchbrüche aufweisen.

Vorteilhaft sind in den tangentialen bzw. konzentrischen Durchbrechungen Rippen bzw. Rippenteilstücke angeordnet.

Vorteilhaft besitzen die zur Verbindung der Bremsscheibenteilstücke vorgesehenen Schrauben in der Mitte zwischen zwei Gewinden eine Verdrehsicherung, zum Beispiel in Form eines Vierkants, welcher in einer entsprechend geformten Ausnehmung in einem Bremsscheibenteilstück liegt.

Der Vorteil der erfindungsgemässen Ausbildung einer geteilten Bremsscheibe besteht darin, dass eine wesentlich gössere Rippenfläche für die Kühlung der Bremsscheibe zur Verfügung steht, als bei den bisherigen Verbindungen der Bremsscheibenteilstücke.

In den Zeichnungen sind beispielsweise Ausführungsformen der Erfindung dargestellt und zwar zeigen :

Figur 1    eine Rückansicht einer Verbindungsstelle zweier Bremsringteilstücke, teilweise geschnitten,

Figur 2    eine andere Anordnung der Verbindungsnocken und Schrauben,

Figur 3    die Ausbildung einer Rippe mit Verbindungsnocken bei einer Bremsscheibe mit ungeteiltem Bremsring.

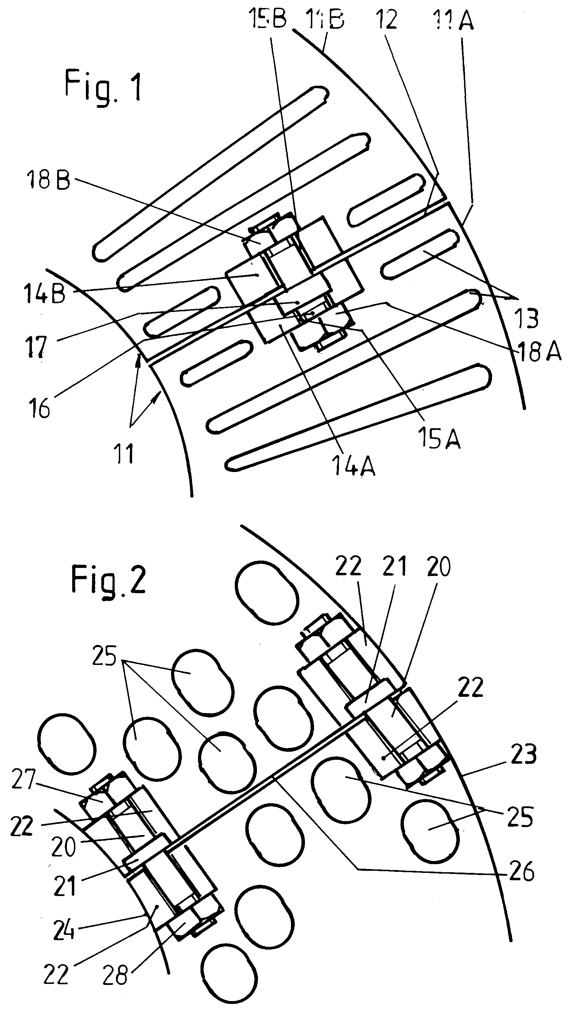

Nach Fig. 1 sind auf der Rückseite eines Bremsrings 11, welcher durch eine achsparallele Ebene in der Fuge 12 in die beiden Teile 11A und 11B geteilt ist, radiale Rippen 13 angeordnet, welche Kühlluftkanäle bilden, durch die die Luft zur Kühlung der erwärmten Bremsscheibe geleitet wird. In der neutralen Phase tragen beide Bremsringteile 11A und 11B je einen Nocken 14A und 14B beiderseits der Teilungsfuge 12. Beide Nocken 14A und 14B besitzen tangential liegende und miteinander fluchtende Bohrungen 15A und 15B, in denen eine tangential angeordnete Schraube 16 mit einem Doppelgewinde liegt. Zwischen den beiden Gewinden ist als Verdrehsicherung ein Vierkant 17 vorgesehen, welcher in einer entsprechend geformten Ausnehmung in einem Bremsringteilstück 11A liegt, wodurch eine Verdrehung der Schraube 16 beim Festziehen verhindert wird. Beiderseits der Teilungsfuge 12 liegt auf dem über die Nocken 14A und 14B überstehendem Teil der Schraube 16 je eine Mutter 18A und 18B.

In manchen Fällen genügt es nicht, nur eine Schraube zur Verbindung der Bremsscheibenteilstücke vorzusehen. In diesem Fall müssen zwei tangential liegende Schrauben 2o vorgesehen werden, so wie es in Fig.2 dargestellt ist. Auch hierbei m muss eine Verdrehsicherung 21 in Form eines auf den Schrauben 2o angeordneten Vierkants angeordnet werden. Die Nocken 22 sind hierbei so angeordnet, dass sie möglichst weit an dem Aussenumfang 23 und em Innenumfang 24 angeordnet sind, sodass zwischen den Nocken 22 der Rippenbereich mit den Rippen 25 weitergeführt ist. An der Teilungsfuge 26 tritt also keine Unterbrechung der Rippen auf, sondern die Kühlung durch die Kühlluft wird auch zwischen den beiden Nocken 22 weitgehend aufrechterhalten. Dies ist besonders deswegen wichtig, weil bei den bekannten Ausführungen von geteilten Bremsscheiben die Erwärmung über den Umfang der Bremsscheibe gesehen ungleichmässig war, was wieder Schwierigkeiten bei der Befestigung der Bremsscheibenteilstücke auf der Nabe oder am Schienenfahrzeugrad ergab. Es ist leicht einzusehen, dass bei den bekannten Ausführungen von geteilten Bremsscheiben der Fugenbereich wärmer werden muss als der übrige Bereich der Bremsscheibe, weil im Fugenbereich die Rippen nicht mehr vorhanden waren und kürzer gehalten wurden, also die Kühlung schlechter war.

Beim Zusammenbau dieser erfindungsgemässen Bremsscheiben wurde zuerst die Schraube 16,2o mit ihrem Vierkant 17,21 in die entsprechende Ausnehmung im Bremsscheibenteilstück eingelegt und mit der Mutter 18A,28 festgezogen. Anschliessend wird das andere Teilstück 11B,23 auf die Schrauben geschoben und dann mit den Muttern 18B,27 festgezogen und die beiden Teilstücke fest miteinander verbunden. Bei besonders kleinen Bremsscheiben kann es notwendig werden, um die Muttern herum eine Erweiterung vorzusehen, damit man mit einem Schraubenschlüssel oder einer Ratsche an die Muttern herankommt. In keinem Falle braucht aber diese Erweiterung so gross zu sein, dass dadurch die Kühlung der Scheibe um die Teilungsfuge herum beeinträchtigt wird.

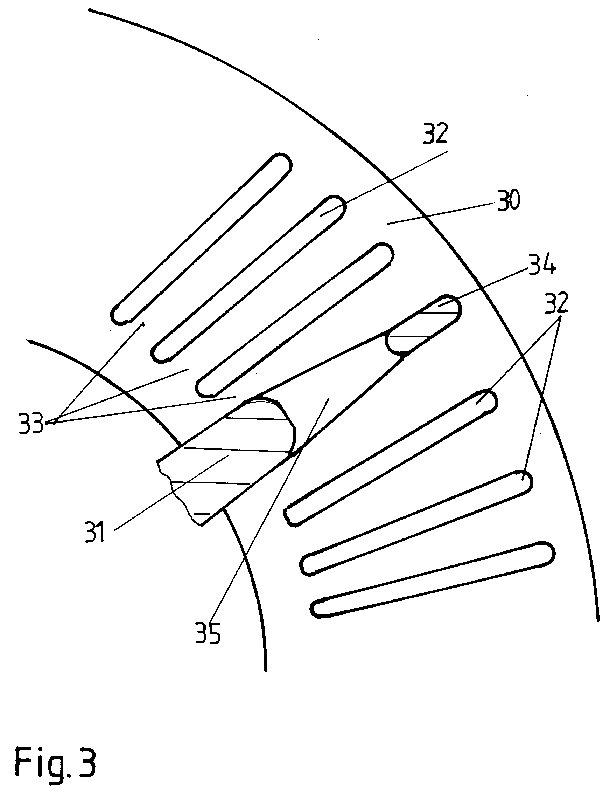

Die Konstruktion nach Fig. 3 zeigt die Rückseite eines ungeteilten Bremsrings 3o, welcher mit einem Nocken 31 mit der Nabe (nicht dargestellt) lösbar oder unlösbar verbunden ist. Die Nabe kann auch mit dem Bremsring 3o aus einem Stück bestehen zum Beispiel in einem Stück gegossen sein. Auf dem Bremsring 3o sind radiale Rippen 32 angeordnet, welche Kühlluftkanäle 33 bilden. Ausgewählte Rippen 34 sind nach der Nabe zu in die Verbindungsnocken 31 verlängert und verbreitert. Da diese Rippen 34 den Kühlluftfluss sehr stark beeinträchtigen ist ein Grossteil ihrer Länge mit einer Durchbrechung 35 versehen, welche etwa tangential verläuft, wobei die Grösse und Lage der Durchbrechung den Anforderungen hinsichtlich der Kühlung angepasst werden kann. Die Durchbrechung 35 kann nämlich auch in mehrere kleine Durchbrechungen oder Bohrungen aufgeteilt sein, wenn dies notwendig sein sollte. Wichtig ist nur, dass ein Kühlluftfluss durch die Rippe 34 hindurch erfolgen kann.
Diese quer liegenden Durchbrechungen an den Rippen können den Nachteil des verhinderten radialen Kühlluftflusses aufheben.

**Patentansprüche**

1. Geteilte oder ungeteilte Bremsscheibe mit Ventilation für Schienenfahrzeuge, bestehend aus einer nabe und einem fest oder lösbar mit der Nabe verbundenen Bremsring, wobei gegebenenfalls einzelne Rippen zur Verbindung von Nabe mit Bremsring zu Verbindungsnocken verlängert und/oder verbreitert sind, dadurch gekennzeichnet, dass die die Verbindungsnocken (31) tragenden Rippen (34) bzw. die beiderseits einer Teilungsfuge liegenden Rippenteilstücke konzentrisch oder tangential verlaufende Ausnehmungen (35), Bohrungen oder Durchbrüche aufweisen.

2. Geteilte oder ungeteilte Bremsscheibe mit Ventilation nach Anspruch 1, dadurch gekennzeichnet, dass in den tangentialen Ausnehmungen Rippen bzw. Rippenteilstücke angeordnet sind.

3. Geteilte oder ungeteilte Bremsscheibe mit Ventilation, dadurch gekennzeichnet, dass mind. eine tangential liegende Schraube (16) zum Verbinden der Bremsringteilstücke (11A,11B) in einem Nocken (14A,14B) in der neutralen Phase des Bremsrings (11) angeordnet ist und der Rippenbereich radial innerhalb und ausserhalb des Bremsringverbindungsnockens (14A,14B) an diesem vorbeigeführt ist oder je eine tangential liegende Schraube (2o) nahe dem inneren (24) und äusseren (23) Umfang des Bremsrings (11) vorgesehen ist, wobei der Bereich der Kühlrippen (25) zwischen den beiden Nocken (22) in radialer Richtung einen möglichst grossen Bereich abdeckt.

4. Bremsscheibe nach Anspruch 3, dadurch gekennzeichnet, dass die Verbindungsschrauben (16,2o) eine Verdrehsicherung besitzen.

Fig. 1

Fig. 2

Fig. 3

**Europäisches Patentamt**

# EUROPÄISCHER RECHERCHENBERICHT

| | EINSCHLÄGIGE DOKUMENTE | | EP 91120757.9 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
| X | <u>DE - A - 3 823 148</u><br>(SHWÄBISCHE HÜTTENWERKE GMB)<br>* Fig. 4-7 *<br>-- | 1 | F 16 D 65/12 |
| A | <u>DE - A - 3 320 543</u><br>(KNORR-BREMSE GMBH)<br>* Fig. 1 *<br>-- | 1 | |
| A | <u>US - A - 4 745 996</u><br>(WIRTH)<br>* Fig. 2 *<br>-- | 1 | |
| A | <u>US - A - 4 004 661</u><br>(AIRHEART PRODUCTS INC)<br>* Fig. 3-7 *<br>-- | 3,4 | |
| A | <u>US - A - 4 120 386</u><br>(AIRHEART PRODUCTS INC)<br>* Fig. 3 *<br>---- | 3 | |
| | | | RECHERCHIERTE SACHGEBIETE (Int Cl⁵) |
| | | | F 16 D 65/00 |

Der vorliegende Recherchenbericht wurde für alle Patentansprüche erstellt.

| Recherchenort | Abschlußdatum der Recherche | Prüfer |
|---|---|---|
| WIEN | 28-02-1992 | KAMMERER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82